# EUROPÄISCHE PATENTSCHRIFT

(11) **EP 0 479 021 B1**
(45) Veröffentlichungstag und Bekanntmachung des Hinweises auf die Patenterteilung: **14.12.1994**
(21) Anmeldenummer: 91115658.6
(22) Anmeldetag: 16.09.1991
(51) Int. Cl.: F16K 47/04, F01D 17/14, F16K 17/10

(54) **Stellventil für dampfförmige oder flüssige Medien**
Servo-valve for vapourous or liquid media
Servo-soupape pour médias vaporeux ou liquides

(30) Priorität: 29.09.1990 DE 4030903; 19.12.1990 DE 4040701
(43) Veröffentlichungstag der Anmeldung: 08.04.1992
(73) Patentinhaber: SIEMENS AKTIENGESELLSCHAFT, 80333 München (DE)
(72) Erfinder: Dörr, Hermann, W-8522 Herzogenaurach (DE)

(56) Entgegenhaltungen:
- DE-A- 1 904 971
- DE-B- 2 415 420
- DE-C- 100 897
- DE-U- 8 627 410
- US-A- 4 895 342
- US-A- 4 938 450

## Beschreibung

Die Erfindung bezieht sich auf ein Stellventil für dampfförmige oder flüssige Medien, mit Spindelantrieb.

Aus der Verfahrens- und Kraftwerkstechnik ist es bekannt, daß zur Verringerung der erforderlichen Stellkräfte bei gasförmgien Medien häufig druckentlastete Stellglieder eingesetzt werden. Im wesentlichen kommen dabei zwei Varianten zur Anwendung:
1. Ausführung mit Dauerentlastung. Hierbei wird die Druckentlastung meistens über eine Bohrung durch den Drosselkörper, die den Niederdruck- mit dem Druckentlastungsraum verbindet, realisiert. Der große Nachteil dieser Ausführung ist, daß über die Entlastungsbohrung ein dauernder Leckmengenstrom fließt. Es müssen deshalb häufig zusätzliche, dicht schließende Absperrorgane installiert werden.
2. Ausführung mit gesteuerter Druckentlastung. Die Druckentlastung wird bei dieser Variante durch das Betätigen eines zweiten Stellgliedes - meist außerhalb des Hauptstellgliedes - erreicht. Außer dem zusätzlichen Druckentlastungsstellglied sind hier noch Rohrleitungen mit dem zugehörigen Montage- und Prüfungsaufwand sowie ein erheblicher leittechnischer Aufwand erforderlich. Da bei einer Störung im Bereich des Druckentlastungsstellglieds auch das Hauptstellglied beeinträchtigt wird, muß mit einer Reduzierung der Gesamtverfügbarkeit gerechnet werden. Leckmengenströme treten bei dieser zweiten Variante nicht oder praktisch nicht auf.

In der DE-A-349 305 ist ein Absperrventil mit Fernsteuerung durch einen Dampfkolben beschrieben. Das Absperrventil hat einen Ventilsitz, der durch einen Ventilkegel verschließbar ist. Der Ventilkegel besteht aus zwei Teilen, nämlich einem inneren Ventilkegel und einem äußeren Ventilkegel. Der innere Ventilkegel ist über eine Spindel mit dem Dampfkolben starr verbunden. Die Spindel ist in einem verschieblichen Nippel geführt, der mit dem äußeren Ventilkegel starr verbunden ist. Bei einer Öffnungsbewegung des Absperrventils, einer Aufwärtsbewegung der Spindel, nimmt der innere Ventilkegel durch den Nippel den äußeren Ventilkegel bis zur vollen Ventilöffnung mit.

Der Erfindung liegt die Aufgabe zugrunde, ein Stellventil für dampfförmige oder flüssige Medien, mit Spindelantrieb, zu schaffen, mit dem es möglich ist, mit einem einzigen Spindelantrieb zwei Ventilspindeln mit zugehörigen Drosselkörpern zeitrichtig so zu betätigen, daß zum einen der Vorteil der Druckentlastung (geringe Stellkräfte) und zum anderen ein jeweils dicht schließendes Ventil in der Schließposition gewährleistet ist.

Erfindungsgemäß wird die gestellte Aufgabe gelöst durch ein Stellventil für dampfförmige oder flüssige Medien mit einem Hauptdrosselkörper zum Öffnen und Schließen eines Hauptventils, einem Hilfsdrosselkörper zum Öffnen und Schließen eines Hilfsventils, einem gemeinsamen Spindelantrieb und mit
a) einer dem Hauptventil zugehörigen Hauptspindel zur Übertragung der Schubkräfte auf den Hauptdrosselkörper,
b) einer dem Hilfsventil zugehörigen Hilfsspindel zur Übertragung der Schubkräfte auf den Hilfsdrosselkörper, wobei
c) die Stellkräfte des gemeinsamen Spindelantriebs für Hauptspindel und Hilfsspindel jeweils über erste und zweite federelastische Kupplungen auf den Haupt- bzw. Hilfsdrosselkörper übertragbar und die beiden Spindeln so aufeinander abgestimmt sind, daß
   c1) beim Schließvorgang der Hauptdrosselkörper schließt, bevor der Hilfsdrosselkörper seinen Hilfsventilsitz erreicht, und
   c2) beim Öffnungsvorgang der Hilfsdrosselkörper öffnet, bevor der Hauptdrosselkörper seinen Hauptventilsitz verläßt.

Vorteilhafte Weiterbildungen sind in den Unteransprüchen angegeben.

Mit der Doppelspindelsteuerung nach der Erfindung kann im Zusammenwirken mit einer gesteuerten Druckentlastung der Vorteil der Druckentlastung (geringe Stellkräfte) bei gleichzeitiger Forderung nach dicht schließenden Ventilen ohne zusätzliche Entlastungsventile, Rohrleitungen, Antriebe sowie deren Ansteuerung und Energieversorgung realisiert werden. Besonders günstig ist in diesem Zusammenhang die Ausführung des Stellventils nach Anspruch 2 mit den folgenden Merkmalen:
a) Der Hauptdrosselkörper weist ein Druckentlastungs-Kanal-System mit einem Hauptkanal auf, welcher in geöffnetem Zustand einen Druckentlastungsraum mit der Abströmseite des Stellventils verbindet,
b) der Druckentlastungsraum befindet sich in einer als Kolbenraum ausgebildeten Gehäusekammer, an deren Ringwand der rückwärtige kolbenartige Teil des Hauptdrosselkörpers geführt ist, wobei der Druckentlastungsraum über erste der Entwässerung dienende Nebenkanäle mit der Zuströmseite des Stellventils dauernd und über zweite der Druckentlastung dienende Nebenkanäle mit der Abströmseite des Stellventils nur bei geöffnetem Hilfsventil in Verbindung steht.

Die Kombination der Merkmale nach den Patentansprüchen 1 und 2 führt zu einer bevorzugten Ausführungsform der Erfindung nach Anspruch 3, welche dadurch gekennzeichnet ist, daß der Hilfsventilsitz Teil des Hauptdrosselkörpers ist so daß der Hauptkanal durch den Hilfsdrosselkörper
- nach Schließung des Hauptventils durch den Hauptdrosselkörper schließbar ist und so durch den sich im Druckentlastungsraum aufbauenden zuströmseitigen Druck die auf den Hauptdrosselkörper wirkende Schließkraft vergrößert wird,
- vor Öffnung des Hauptventils durch den Hauptdrosselkörper öffenbar ist und so durch den im Druckentlastungsraum abfallenden Druck auf einen Wert, der dem abströmseitigen Druck nahezu gleich ist, die Öffnungsbewegung des Hauptdrosselkörpers durch Fortfall von ihr entgegenwirkenden Druckkräften erleichtert ist.

Der Spindelantrieb nach der Erfindung läßt sich sowohl von einem Schubantrieb als auch von einem Drehantrieb betätigen. Für die erstgenannte Ausführungsform ist es besonders vorteilhaft, wenn ein Schubantrieb als Spindeltrieb und eine Kolbenstange als Antriebsglied vorgesehen sind und wenn die erste federelastische Kupplung als ein Federkorb ausgebildet ist, mit einer im Korbgehäuse gelagerten vorgespannten Druckfeder, die sich einerseits am Korbboden und andererseits an einem Ringflansch der Kolbenstange abstützt, welcher seinerseits mittels eines Korbdeckels im Korbgehäuse gefangen ist (Anspruch 16).

Eine bevorzugte Ausführungsform für einen Drehantrieb ist gemäß Anspruch 19 dadurch gekennzeichnet, daß der Spindelantrieb ein Drehantrieb ist, mit einer Spindelmutteranordnung, durch deren Drehung der Hauptspindel und der Hilfsspindel je eine Bewegung in Hubrichtung erteilbar ist, wobei durch die erste, der Hauptspindel zugeordnete und die zweite, der Hilfsspindel zugeordnete federelastische Kupplung eine axiale Relativbewegung der beiden Spindeln ermöglicht ist.

Weitere Merkmale und Vorteile der Erfindung sowie ihre Wirkungsweise werden im folgenden anhand von zwei in der Zeichnung dargestellten Ausführungsbeispielen näher erläutert. In der Zeichnung zeigen in vereinfachter Darstellung:
- FIG 1: ein erstes Ausführungsbeispiel eines Stellventils nach der Erfindung mit Schubantrieb in einem Axialschnitt durch das Ventilgehäuse und
- FIG 2: ein zweites Ausführungsbeispiel eines Stellventils nach der Erfindung mit einem Drehantrieb in einer Figur 1 entsprechenden Darstellung.

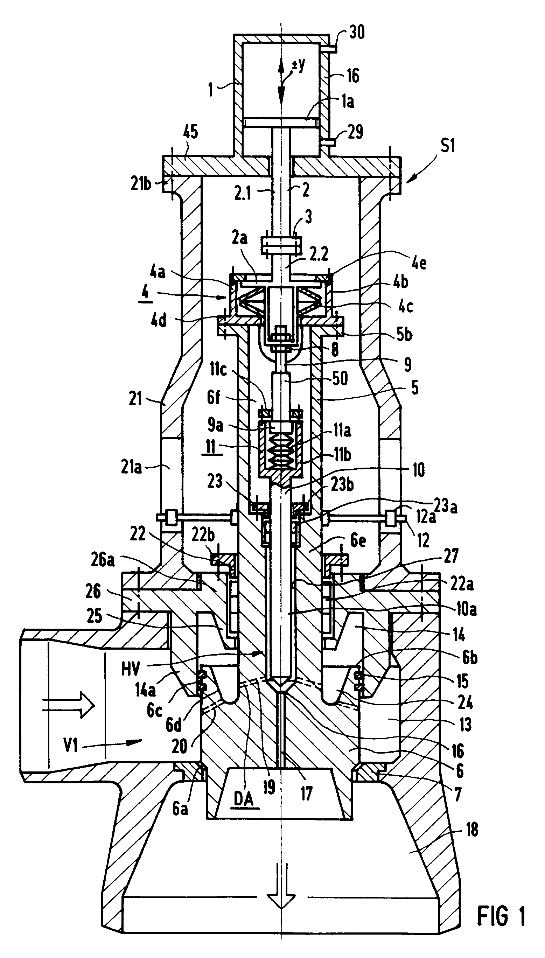

Figur 1 zeigt im prinzipiellen Aufbau des Stellventils mit Doppelspindelsteuerung, mit gesteuerter Druckentlastung und mit einem Schubantrieb als gemeinsamer Spindelantrieb. Der Schubantrieb 1 kann grundsätzlich ein Hydraulik-, ein Pneumatik- oder Elektro-Antrieb sein. Dargestellt ist die bevorzugte Ausführungsform eines Hydraulikantriebs. Vom Schubantrieb 1 aus wird über die Kolbenstange 2, die Kupplung 3, eine erste federelastische Kupplung 4 in Form eines vorspannbaren Federkorbes die Hauptspindel 5 mit dem Hauptdrosselkörper 6 betätigt. In geschlossenem Zustand wird die insbesondere konisch geformte Dichtfläche 6a des Hauptdrosselkörpers 6 auf die entsprechende Gegenfläche des Hauptventilsitzes 7 gepreßt. Über die Längenverstelleinrichtung 8 ist das Hilfsspindeloberteil 9 starr an der Kupplung 3 befestigt. Die Hilfsspindel ist als Ganzes mit 50 bezeichnet. Zwischen dem Hilfsspindeloberteil 9 und dem Hilfsspindelunterteil 10 befindet sich die zweite federelastische Kupplung 11 in Form eines vorgespannten Tellerfederpaketes 11a. An der Hauptspindel 5 befindet sich die Hubstellungsanzeige und Verdrehsicherung 12 in Gestalt von mit der Hauptspindel 5 drehfest verbundenen, radial abstehenden Rollenarmen, deren achsparallel zur Hubrichtung ± y in entsprechenden Längsschlitzen eine Ventillaterne 21 bewegbare Rollen mit 12a bezeichnet sind.

Der vom Hilfsdrosselkörper 10a verschließbare Austritt des Hilfssitzes 16 ist über den Hauptkanal 17 eines Druckentlastungs-Kanalsystems DA mit der Abströmseite 18 des Stellventils verbunden. Diese Abströmseite 18 kann man auch als Ventilaustrittsraum oder als Niederdruckraum bezeichnen. Der Druckentlastungsraum 14 ist über erste der Entwässerung dienende Nebenkanäle 20 mit der Zuströmseite 13 des Stellventils S1 dauernd und über zweite, der Druckentlastung dienende Nebenkanäle 19 mit der Abströmseite 18 des Stellventils S1 nur bei geöffnetem Hauptkanal 17 verbindbar. Die Kanäle 17, 19, 20 sind bevorzugt als Bohrungen ausgeführt. Die Nebenkanäle 20 dienen, wie gesagt, der Ableitung von Kondensat aus dem Druckentlastungsraum 14. Die Zuströmseite 13 kann man auch als Ventileintrittsraum oder als Hochdruckraum bezeichnen.

Der Druckentlastungsraum 14 ist eine als Kolbenraum ausgebildete Gehäusekammer, an deren Ringwand 14a der rückwärtige, kolbenartige Teil 6b des Hauptdrosselkörpers 6 geführt ist. In Ringnuten am Außenumfang des kolbenartigen Teils 6b sind Kolbenringe 15 in entsprechende Ringnuten 6c eingefügt. Diese liegen an entsprechenden Dichtflächen am Innenumfang der Ringwand 14a an, wobei diese Kolbenringdichtung außer ihrer Funktion der Dichtung zwischen der Zuströmseite 13 und dem Druckausgleichsraum 14 die Funktion der Führung des Drosselkörpers 6 in Hubrichtung ± y haben.

Zur Erläuterung der Arbeitsweise sei zunächst auf die Voreinstellung der Hilfsspindel 5 eingegangen. Bei nicht eingedrückter erster federelastischer Kupplung 4 in der bevorzugten Gestalt des Federkorbes 4a, d.h. die Stellung der Hauptspindel 5 ist größer als 0 %, wird über die Längenverstelleinrichtung 8 ein maximaler Hub (Abstand zwischen Hilfssitz 16 und Hilfsspindel 50) der Hilfsspindel 50 eingestellt, der ungefähr dem halben Einfederweg des ersten elastischen Kupplungsgliedes 4 entspricht.

### Funktion in Schließrichtung:

Es sei zur Erläuterung von der Ausgangssituation ausgegangen, daß Schubantrieb 1, Hauptspindel 5 und Hauptdrosselkörper 6 sich in Auf- oder einer Zwischenstellung befinden. In diesem Falle sind der vorgespannte Federkorb 4a der ersten federelastischen Kupplung 4 und die vorgespannten Tellerfedern 11a der zweiten federelastischen Kupplung 11 gestreckt. Die Hilfsspindel 50 hat den voreingestellten maximalen Hub eingenommen, d.h. der Druckentlastungsraum 14 ist über die zweiten Nebenkanäle 19 und den Hauptkanal 17 mit der Abströmseite 18 verbunden.

Bewegt nun der Schubantrieb die Hauptspindel 5 mit dem Hauptdrosselkörper 6 in Schließrichtung - y, dann bleibt die relative Stellung der Hilfsspindel 50 zur Hauptspindel 5 bis zum Erreichen der Zuendlage, d.h. bis zum Aufsetzen des Hauptdrosselkörpers 6 auf den Hauptventilsitz 7, erhalten. Erst beim Einfedern des Federkorbes der ersten federelastischen Kupplung 4 wird das Hilfsspindelunterteil 10 in Richtung Hilfsventilsitz 16 bewegt, bis schließlich beim halben Einfederweg des Federkorbes der ersten federelastischen Kupplung 4 das Hilfsspindelunterteil 10 fest auf den Hilfsventilsitz 16 aufgedrückt wird. Beim weiteren Zusammendrücken des Federkorbes 4a werden auch dann die vorgespannten Tellerfedern des Tellerfederpaketes 11a zusammengedrückt. Das Hilfsspindelunterteil 10 wird mit der Federkraft des Tellerfederpaketes 11a in den Hilfsventilsitz 16 gedrückt, wodurch die Verbindung vom Druckentlastungsraum 14 zur Abströmseite 18 abgesperrt wird.

Im Druckentlastungsraum 14 baut sich jetzt über die Kolbenringe 15 und die ersten Nebenkanäle 20 der Druck der Zuströmseite 13 auf und drückt über die wirksame Fläche des Hauptdrosselkörpers 6 noch zusätzlich auf den Hauptventilsitz 7. Damit ist der Dichtschließzustand erreicht.

### Funktion in Öffnungsrichtung:

Hierzu sei vom Dichtschließzustand ausgegangen, bei dem nicht nur der Hauptdrosselkörper 6 auf seinem Hauptventilsitz 7 aufsitzt, sondern auch der Hilfsdrosselkörper 10a auf seinem Hilfsventilsitz 16. Sobald sich die Kolbenstange 2 in Aufrichtung + y bewegt, beginnt die Entspannung des Federkorbes 4a und der Tellerfedern 11a. Wenn der Federkorb 4a etwa zur Hälfte entspannt ist, beginnt sich das Hilfsspindelunterteil 10 mit seinem Hilfsdrosselkörper 10a vom Hilfsventilsitz 16 abzuheben und öffnet die Verbindung vom Druckentlastungsraum 14 zur Abströmseite 18 über den Hauptkanal 17.
Damit wird der Druck im Druckentlastungsraum 14 auf einen Wert abgesenkt, der nur geringfügig oberhalb des Druckes der Abströmseite 18 liegt. Erst bei vollkommen gestrecktem Federkorb 4a beginnt die Öffnungsbewegung der Hauptventilspindel 5 und des Hauptdrosselkörpers 6. Vom Schubantrieb 1 sind beim Öffnungsvorgang im wesentlichen nur die Reibungskräfte der Stopfbuchse 22 der Hauptspindel 5, ferner die Reibungskräfte an den Kolbenringen 15 und - außer der Gewichtskraft - die Kraft zu überwinden, die sich aus der Differenz des Druckes im Druckentlastungsraum 14 und auf der Abströmseite 18, multipliziert mit dem wirksamen Querschnitt des Hauptdrosselkörpers 6, ergibt. Aus Figur 1 und der vorstehenden Beschreibung ist ersichtlich, daß das Stellventil S1 einen Hauptdrosselkörper 6 zum Öffnen und Schließen des Hauptventils V1 aufweist, ferner eine zugehörige Hauptspindel 5 zur Übertragung der Schubkräfte auf den Hauptdrosselkörper 6. Weiterhin weist das Stellventil S1 einen Hilfsdrosselkörper 10a zum Öffnen und Schließen eines Hilfsventils HV auf nebst einer zugehörigen Hilfsspindel 50 zur Übertragung der Schubkräfte auf den Hilfsdrosselkörper 10a. Die Stellkräfte des gemeinsamen Spindelantriebs 1 für Hauptspindel 5 und Hilfsspindel 50 sind jeweils über erste und zweite federelastische Kupplungen 4 bzw. 11 auf den Haupt- bzw. Hilfsdrosselkörper 6, 10a übertragbar, wobei die beiden Spindeln 5, 50 so aufeinander abgestimmt sind, daß beim Schließvorgang der Hauptdrosselkörper 6 schließt, bevor der Hilfsdrosselkörper 10a sein Hilfsventils schließt. Ferner ist die Abstimmung so, daß beim Öffnungsvorgang der Hilfsdrosselkörper 10a sein Hilfsventil bereits öffnet, bevor der Hauptdrosselkörper 6 sein Hauptventil öffnet.

Der Hauptdrosselkörper 6 weist ein Druckentlastungs-Kanalsystem DA mit einem Hauptkanal 17 auf. Dieser Hauptkanal 17 verbindet in geöffnetem Zustand einen Druckentlastungsraum 14 mit der Abströmseite 18 des Stellventils S1. Der Druckentlastungsraum 14 ist eine als Kolbenraum ausgebildete Gehäusekammer, an deren Ringwand 14a der rückwärtige kolbenartige Teil 6b des Hauptdrosselkörpers 6 geführt ist. Die ersten und zweiten Nebenkanäle 20 bzw. 19 wurden bereits erläutert.

Der Hilfsventilsitz 16 ist Teil des Hauptdrosselkörpers 6, so daß der Hauptkanal 17 durch den Hilfsdrosselkörper 10a
a) nach Schließung des Hauptventils durch den Hauptdrosselkörper 6 schließbar ist und so durch den sich im Druckentlastungsraum 14 aufbauenden zuströmseitigen Druck die auf den Hauptdrosselkörper 6 wirkende Schließkraft vergrößert wird,
b) vor Öffnung des Hauptventils durch den Hauptdrosselkörper 6 öffenbar ist und so durch den im Druckentlastungsraum 14 abfallenden Druck auf einen Wert, der dem abströmseitigen Druck nahezu gleich ist, die Öffnungsbewegung des Hauptdrosselkörpers 6 durch Fortfall von ihr entgegenwirkenden Druckkräften erleichtert ist.

Eine besonders kompakte Anordnung ist dadurch erzielbar, daß, wie dargestellt, der Hilfsdrosselkörper 10a mit seiner Hilfsspindel 50, also mit Hilfsspindel-Unterteil 10 und Hilfsspindel-Oberteil 9, koaxal und längsverschieblich innerhalb der Hauptspindel 5 des Hauptdrosselkörpers 6 gelagert ist. Wie erwähnt, sind Haupt- und Hilfsspindel 5, 50 über ein gemeinsames Antriebsglied, die Kolbenstange 2, von einem gemeinsamen Spindeltrieb 1 bewegbar. Dies wird in besonders vorteilhafter Weise verwirklicht dadurch, daß das Antriebsglied 2 des Spindeltriebs 1 über die erste federelastische Kupplung 4 mit der Hauptspindel 5 und über die zweite federelastische Kupplung 11 mit der Hilfsspindel 50 gekoppelt ist. Zur präzisen Abstimmung der Schließkräfte und der Schließ- und Öffnungsbewegungen ist zwischen dem Antriebsglied 2 und der zweiten federelastischen Kupplung 11 eine Längenverstelleinrichtung 8 für die Hilfsspindel 50 eingefügt.

Der durch die Hohlkehle auf der Rückseite des Hauptdrosselkörpers 6 gebildete Ringraum 24 ist an die Kontur des Vorsprungs 25 des Zwischenstücks 26 angepaßt und ermöglicht so den nötigen Öffnungsweg des Hauptdrosselkörpers 6 bei gedrungener Bauweise. Außerdem werden dadurch elastische Kolbenflanken 6d gebildet, was für den dichtenden Gleitsitz der Kolbenringe 15 von Vorteil ist.

Zur Ausbildung des Hilfsventils, das als Ganzes mit HV bezeichnet wird, weist eine den Hauptdrosselkörper 6 tragender Schaftteil 6e der Hauptspindel 5 eine zentrische, axiale Sacklochbohrung 27 auf, in welcher der als ein Stößel ausgebildete Hilfsdrosselkörper 10a längs verschieblich bewegbar ist. Durch die Sacklochbohrung 27 ist an ihrem Grunde ein konischer Hilfsventilsitz 16 für den an seinem Ende entsprechend konisch ausgebildeten Hilfsdrosselkörper 10a gebildet. Der Hauptkanal 17 ist vom Grunde des konischen Hilfsventilsitzes durch den Hauptdrosselkörper 6 hindurch bis zur Abströmseite 18 geführt. Es ist ersichtlich, daß die Nebenkanäle erste Nebenkanäle 20 umfassen, welche den Druckentlastungsraum 14 dauernd mit der Zuströmseite 13 verbinden, und zweite Nebenkanäle 19 umfassen, welche den Druckausgleichsraum 14 mit dem Grunde der Sacklochbohrung 27 jeweils an einer Stelle verbinden, die nahe oder im Bereich des konischen Hilfsventilsitzes 16 des Hilfsdrosselkörpers 10a angeordnet ist. Auf diese Weise wird eine Verbindung der zweiten Nebenkanäle 19 zum Hauptkanal 17 in Schließstellung des Hilfsdrosselkörpers 10a blockiert, jedoch bei geringem Öffnungshub des Hilfsdrosselkörpers 10a freigegeben. Der Querschnitt der Kanäle 19 und 17 ist wesentlich größer als der Querschnitt der Nebenkanäle 20, damit der Druckabbau im Druckentlastungsraum 14 möglichst groß ist.

Die den rückwärtigen Teil 6d des Hauptdrosselkörpers 6 (Kolbenflanken) dichtend führende Ringwand 14a der Gehäusekammer bzw. des Druckentlastungsraums 14 sitzt an einem zwischen Ventilgehäuse 28 und der Ventillaterne 21 eingefügten Zwischenstück 26. Das Zwischenstück 26 bildet mit einer zentrischen Ringkragenpartie 26a, an welcher auch die Vorsprünge 25 sitzen, ein Lager für die Stopfbuchse 22. Durch letztere, bestehend aus der Stopfbuchspackung 22a und dem Abschlußdeckel 22b, ist der Schaftteil 6e des Hauptdrosselkörpers 6 dichtend und gleitend hindurchgeführt.

Wie man sieht, ist der Schaftteil 6e der Hauptspindel 5 im Anschluß an die Sacklochbohrung 27 für den Hilfsdrosselkörper 10a mit einem erweiterten Hohlraum 6f versehen und innerhalb dieses Hohlraums 6f die Hilfsspindel 50 mit ihrer zweiten federelastischen Kupplung 11 in Hubrichtung ± y bewegbar. Die zweite federelastische Kupplung 11 ist bevorzugt als ein Federkorb ausgebildet, mit einer vorgespannten Druckfeder-Anordnung, insbesondere einer Tellerfeder-Anordnung in Gestalt eines Tellerfeder-Paketes 11a. Der Federkorb 11b sitzt am Hilfsspindel-Unterteil 10. Das Hilfsspindeloberteil 9 ist mit einem verstärkten Kopfteil 9a innerhalb des Federkorbes 11b längsverschieblich und - belastet durch das Tellerfederpaket 11a - gelagert sowie durch einen Korbdeckel 11c gefangen.

Die Federkorbausbildung ist auch für die erste federelastische Kupplung 4 der Hauptspindel vorteilhaft. Figur 1 läßt erkennen, daß bei dem dargestellten Schubantrieb 1 als Spindeltrieb und der Kolbenstange 2 als Antriebsglied die erste federelastische Kupplung 4 als ein Federkorb 4a ausgebildet ist, mit einer im Korbgehäuse 4b gelagerten vorgespannten Tellerfeder-Anordnung 4c in Form eines Tellerfederpaketes. Das Tellerfederpaket 4c stützt sich einerseits am Korbboden 4d und andererseits an einem Ringflansch 2a der Kolbenstange 2 ab. Der Ringflansch 2a ist seinerseits mittels eines Korbdeckels 4e im Korbgehäuse 4b gefangen. Der besseren Montierbarkeit wegen ist die Kolbenstange 2 durch eine Kupplung 3 unterteilt, so daß sich ein oberer und ein unterer Kolbenstangenteil 2.1 bzw. 2.2 ergeben.

Der Schubantrieb 1 ist als ein hydraulisches Kolben-Zylinder-System ausgeführt mit Kolben 1a und Zylindergehäuse 1b, ferner mit Hydraulikleitungs-Anschlüssen 29 und 30.

Entsprechend der Stopfbuchse 22 für den Schaftteil 6e der Hauptspindel 5 ist die Hilfsspindel 50 mit ihrem stößelartigen Hilfsdrosselkörper 10a durch die Stopfbuchse 23 gleitend und dichtend hindurchgeführt, welche die Dichtpackung 23a und den Abschlußdeckel 23b umfaßt.

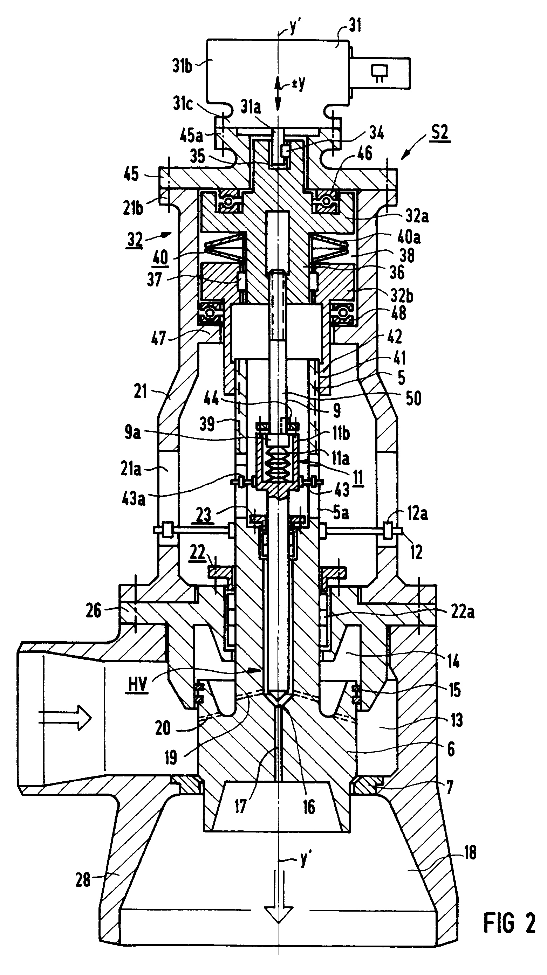

Beim zweiten Ausführungsbeispiel nach Figur 2 ist der Spindeltrieb 31 des Stellventils S2 ein Drehantrieb, mit einer Spindelmutteranordnung 32, durch deren Drehung der Hauptspindel 5 und der Hilfsspindel 50 hier eine Bewegung in Hubrichtung ± y erteilbar ist, wobei durch die erste, der Hauptspindel 5 zugeordnete federelastische Kupplung 40 und durch die zweite, der Hilfsspindel 50 zugeordnete federelastische Kupplung 11 eine axiale Relativbewegung der beiden Spindeln 5, 50 ermöglicht ist.

Dieses zweite Ausführungsbeispiel mit einem Drehantrieb wird im folgenden nur insoweit erläutert, als es unterschiedlich zum ersten Ausführungsbeispiel nach Figur 1 ausgebildet ist; im übrigen tragen funktionsmäßig gleiche Teile auch die gleichen Bezugszeichen wie in Figur 1.

Man erkennt aus Figur 2, daß eine mit dem Spindeltrieb 31 drehfest verbundene erste Spindelmutter 32a (Spindelmutter-Oberteil) mit einem Innengewinde 33 eine Schraublagerung für die verdrehungsgesicherte Hilfsspindel 50 zu deren Axialbewegung bildet. Zur dreh festen Verbindung ist die erste Spindelmutter 32a mit dem Wellenzapfen 31a des Drehantriebs 31 verkeilt; ein entsprechender Federkeil 34 sitzt in einer Nut am Innenumfang einer axialen Sacklochbohrung 35 der ersten Spindelmutter 32a und greift an einer Abflachung des Wellenzapfens 31a oder entsprechenden Nutenflanken an. Auf einem Führungsschaft 36 der ersten Spindelmutter 32a ist die zweite Spindelmutter 32b drehfest, jedoch axial verschieblich gelagert. Hierzu sind am Außenumfang des Führungsschaftes 36 Axialnuten vorgesehen, in welche die zweite Spindelmutter 32b mit an ihrem Innenumfang abgesicherten axialen Federkeilen 37 eingreift. In einem axialen Zwischenraum 38 zwischen der ersten und zweiten Spindelmutter 32a, 32b ist die schon erwähnte erste federelastische Kupplung 40 eingefügt. Die zweite Spindelmutter 32b bildet nun mit einem Gewindeschaft 42 eine Schraublagerung für die verdrehungsgesicherte Hauptspindel 5 zu deren Axialbewegung. Hierzu ist in bevorzugter Ausführungsform das Gewinde an der Hauptspindel 5 ein Außengewinde 39 und das Gewinde an dem Gewindeschaft 42 der Spindelmutter 32b ein Innengewinde 41.

Die erste federelastische Kupplung 40 ist als eine vorgespannte Druckfeder-Anordnung ausgeführt, insbesondere als eine vorgespannte Tellerfeder-Anordnung. Dargestellt ist ein lediglich zweilagiges Tellerfeder-Paket; dieses könnte je nach Größe der erforderlichen Vorspannkraft auch mehrlagig ausgeführt sein. Das vorgespannte Tellerfederpaket ist mit 40a bezeichnet.

Die Steigungen der Gewinde 33 an der ersten Spindelmutter 32a und des Außengewindes 50a an der Hilfsspindel 50 einerseits und die Steigungen der Gewinde 41 der zweiten Spindelmutter 32b und des Gewindes 39 der an dieser schraubgelagerten Hauptspindel 5 andererseits sind einander gleich.

Wenn es beim ersten Ausführungsbeispiel nach Figur 1 nicht erforderlich ist, die Hilfsspindel 50 oder ihre Spindelteile 9, 10 mit Verdrehsicherungen zu versehen, ist dies der Fall beim Beispiel nach Figur 2. Hier sind an dem mit dem Hilfsspindel-Unterteil 10 fest verbundenen Gehäuse des Federkorbes 11b radial abstehende Führungsarme 43 fest angebracht, die mit drehbar an ihnen gelagerten Rollen 43a an der Wand von Längsschlitzen 5a der Hauptspindel 5 in Hubrichtung ± y geführt sind. Die Rollenarme 43 dienen deshalb der Verdrehsicherung des Hilfsspindel-Unterteils 10; außerdem können sie der Hubanzeige dienen, weil ihre Position durch die Führungsschlitze oder -fenster 21a in der Laterne 21 gesehen werden kann. Das Hilfsspindel-Oberteil 9 ist mittels Federkeil 44 verdrehgesichert. Dieser Keil 44 ist an dem Deckel 11c des Gehäuses 11b befestigt, und an ihm kann das Hilfsspindel-Oberteil 9 mit einer nicht näher dargestellten Längsnut in Hubrichtung ± y gleiten.

Der Stellmotor für den Drehantrieb 31 ist bevorzugt ein Elektromotor, der den Wellenzapfen 31a über ein nicht näher dargestelltes selbsthemmendes Getriebe in beiden Drehrichtungen zur Ausführung des von der Leittechnik vorgegebenen Hubes entsprechend einer Differenz Sollwert - Istwert in beiden Drehrichtungen drehen kann. Der Drehantrieb 31 ist mit dem Flansch 31c seines Gehäuses 31b am Gegenflansch 45a eines Kopfstücks mit seinem Wellenzapfen 31a gleichachsig zur Achsrichtung y'-y' der Spindelachsen befestigt. Dieses Kopfstück 45 ist als Abschlußdeckel am oberen Flansch 21b der Ventillaterne 21 ebenfalls zentrisch zur Ventilachse y'-y' angeschraubt.

Beim ersten Beispiel nach Figur 1 ist das Kopfstück 45 mit dem Gehäuse 1b des Schubantriebs 1 einstückig.

Zurück zum Beispiel nach Figur 2: Zwischen der oberen Spindelmutter 32a und der planen Innenfläche des Kopfstücks 45 ist ein Drehlager 46 eingefügt, welches ein Kugel- oder Rollenlager sein kann. Dementsprechend ist zwischen der unteren Spindelmutter 32b und einem nach innen vorspringenden Ringkragen 47 der Ventillaterne 21 ein weiteres Drehlager 48 eingefügt. Diese Drehlager 46, 48 sorgen für eine reibungsarme Drehlagerung der beiden Spindelmuttern 32a, 32b, wobei sie als Drucklager ausgeführt sind, weil sie dem Druck der axialen Stellkräfte ausgesetzt sind.

Zur Beschreibung der Funktion des Stellventils nach Figur 2 sei zunächst auf die Voreinstellung der Hilfsspindel 50 eingegangen. Bei gestreckter Tellerfeder 40a, d.h. Stellung der Hauptspindel 5 größer als 0 %, wird bei gelöster Verdrehsicherung 43, 5a durch Drehen der Hilfsspindel 50 ein maximaler Hub (Abstand zwischen Hilfssitz 16 und Hilfsspindel 50) der Hilfsspindel 50 eingestellt, der ungefähr dem halben Einfederweg der Tellerfeder 40a entspricht.

### Funktion in Schließrichtung:

Es sei ein Ausgangssituation angenommen, bei der der Drehantrieb 31, die Hauptspindel 5 und der Hauptdrosselkörper 6 sich in Auf- bzw. Zwischenstellung befinden. Die vorgespannten Tellerfedern 40a und 11a sind gestreckt. Die Hilfsspindel 50 hat den voreingestellten maximalen Hub eingenommen, d.h. der Druckentlastungsraum 14 ist über die zweiten Nebenkanäle 19 und den Hauptkanal 17 mit der Abströmseite 18 verbunden. Der Druck im Druckentlastungsraum 14 ist deshalb nur unwesentlich höher als derjenige auf der Abströmseite 18 (bedingt durch die Bemessung der Kanalquerschnitte).

Bewegt nun der Drehantrieb 31 durch Drehen der Spindelmutter 32a, 32b die Hauptspindel 5 mit dem Hauptdrosselkörper 6 in Schließrichtung - y, dann bleibt die relative Stellung der Hilfsspindel 50 zur Hauptspindel 5 bis zum Erreichen der Zu-Endlage, d.h. bis zum Aufsetzen des Hauptdrosselkörpers 6 auf den Ventilsitz 7, erhalten. Erst beim Einfedern der Tellerfedern 40a, d.h. beim Aufwärtsbewegen des Spindelmutter-Unterteils 32b, wird das Hilfsspindel-Unterteil 10 in Richtung Hilfsventilsitz 16 bewegt, bis schließlich beim halben Einfederweg der Tellerfeder 40a das Hilfsspindel-Unterteil 10 fest auf den Hilfsventilsitz 16 aufgedrückt wird.

Beim weiteren Zusammendrücken der Tellerfeder 40a werden dann auch die vorgespannten Tellerfedern 11a der zweiten federelastischen Kupplung 11 zusammengedrückt. Das Hilfsspindel-Unterteil 10 wird mit der Federkraft der Tellerfedern 11a in den Hilfsventilsitz 16 gedrückt, wodurch die Verbindung vom Druckentlastungsraum 14 zur Abströmseite 18 abgesperrt wird. Im Druckentlastungsraum 14 baut sich jetzt über die Kolbenringe 15 und die ersten Nebenkanäle 20 der Druck der Zuströmseite 13 auf und drückt über die wirksame Fläche des Hauptdrosselkörpers 6 noch zusätzlich auf den Hauptventilsitz 7. Damit ist der Dichtschließzustand erreicht.

### Funktion in Öffnungsrichtung:

Hierfür sei als Ausgangssituation der vorbeschriebene Dichtschließzustand angenommen. Sobald sich der Drehantrieb 31 in Aufrichtung + y bewegt, beginnt die Entspannung der Tellerfedern 40a und 11a. Wenn die Tellerfeder 40a etwa zur Hälfte entspannt ist, beginnt sich das Hilfsspindel-Unterteil 10 vom Hilfsventilsitz 16 abzuheben und öffnet die Verbindung vom Druckentlastungsraum 14 zur Abströmseite 18. Damit wird der Druck im Druckentlastungsraum 14 auf einen Wert abgesenkt, der nur geringfügig oberhalb des Drucks der Abströmseite 18 liegt. Erst bei vollkommen gestreckter Tellerfeder 40a beginnt die Öffnungsbewegung der Hauptspindel 5 und des Hauptdrosselkörpers 6.

Vom Drehantrieb 31 sind beim Öffnungsvorgang im wesentlichen nur die Reibungskräfte an den Stopfbuchsen 22 der Hauptspindel 5, die Reibungskräfte an der Spindelmutter 32a, 32b und an den Kolbenringen 15 sowie - außer der Gewichtskraft - die Kraft, die aus dem Differenzdruck vom Druckentlastungsraum 14 zur Abströmseite 18, multipliziert mit dem wirksamen Querschnitt des Hauptdrosselkörpers 6, entsteht, zu überwinden.

Wie man es durch einen Vergleich der beiden Ventilausführungen nach Figur 1 und nach Figur 2 erkennen kann, sind Ventilgehäuse 28, Zwischenstück 26 und Ventillaterne 21 gleichartig aufgebaut. Auch die Hauptspindeln 5 mit ihren Drosselkörpern 6 sind gleichartig, bis auf den Unterschied am oberen Ende der in diesem Bereich hohlzylindrischen Hauptspindel 5 nach Figur 1, wo ein Ringflansch 5b zur Verbindung mit dem Federkorb der ersten federelastischen Kupplung 4 vorgesehen ist. Man kann also mit einer grundsätzlichen Bauform die vorteilhafte Arbeitsweise des Stellventils nach der Erfindung sowohl mit einem Schubantrieb als auch mit einem Drehantrieb verwirklichen.

## Patentansprüche

1. Stellventil für dampfförmige oder flüssige Medien mit einem Hauptdrosselkörper (6) zum Öffnen und Schließen eines Hauptventils (V1), einem Hilfsdrosselkörper (10a) zum Öffnen und Schließen eines Hilfsventils (HV) und einem gemeinsamen Spindelantrieb (1), **gekennzeichnet durch** die folgenden Merkmale:
a) eine dem Hauptventil (V1) zugehörige Hauptspindel (5) zur Übertragung der Schubkräfte auf den Hauptdrosselkörper (6),
b) eine dem Hilfsventil (HV) zugehörige Hilfsspindel (50) zur Übertragung der Schubkräfte auf den Hilfsdrosselkörper (10a),
c) die Stellkräfte des gemeinsamen Spindelantriebs (1) für Hauptspindel (5) und Hilfsspindel (50) sind jeweils über erste und zweite federelastische Kupplungen (4, 11) auf den Haupt- bzw. Hilfsdrosselkörper (6, 10a) Übertragbar, wobei die beiden Spindeln (5, 50) so aufeinander abgestimmt sind, daß
c1) beim Schließvorgang der Hauptdrosselkörper (6) schließt, bevor der Hilfsdrosselkörper (10a) seinen Hilfsventilsitz (16) erreicht, und
c2) beim Öffnungsvorgang der Hilfsdrosselkörper (10a) öffnet, bevor der Hauptdrosselkörper (6) seinen Hauptventilsitz (7) verläßt.

2. Stellventil nach Anspruch 1,
**gekennzeichnet durch** die folgenden weiteren Merkmale:
a) der Hauptdrosselkörper (6) weist ein Druckentlastungs-Kanal-System (DA) mit einem Hauptkanal (17) auf, welcher in geöffnetem Zustand einen Druckentlastungsraum (14) mit der Abströmseite (18) des Stellventils (S1) verbindet,
b) der Druckentlastungsraum (14) ist eine als Kolbenraum ausgebildete Gehäusekammer, an deren Ringwand (14a) der rückwärtige kolbenartige Teil des Hauptdrosselkörpers (6) geführt ist, wobei der Druckentlastungsraum (14) über erste der Entwässerung dienende Nebenkanäle (20) mit der Zuströmseite des Stellventils (S1) dauernd und über zweite, der Druckentlastung dienende Nebenkanäle (19) mit der Abströmseite (18) des Stellventils (S1) nur bei geöffnetem Hauptkanal (17) in Verbindung steht.

3. Stellventil nach Anspruch 2,
**dadurch gekennzeichnet,** daß der Hilfsventilsitz (16) Teil des Hauptdrosselkörpers (6) ist, so daß der Hauptkanal (17) durch den Hilfsdrosselkörper (10a)
- nach Schließung des Hauptventils (V1) durch den Hauptdrosselkörper (6) schließbar ist und so durch den sich im Druckentlastungsraum (14) aufbauenden zuströmseitigen Druck die auf den Hauptdrosselkörper (6) wirkende Schließkraft vergrößert wird,
- vor Öffnung des Hauptventils (V1) durch den Hauptdrosselkörper (6) öffenbar ist und so durch den im Druckentlastungsraum (14) abfallenden Druck auf einen Wert, der dem abströmseitigen Druck nahezu gleich ist, die Öffnungsbewegung des Hauptdrosselkörpers (6) durch Fortfall von ihr entgegenwirkenden Druckkräften erleichtert ist.

4. Stellventil nach einem der Ansprüche 1 bis 3,
**dadurch gekennzeichnet,** daß der Hilfsdrosselkörper (10a) mit seiner Hilfsspindel (50) koaxial und längsverschieblich innerhalb der Hauptspindel (5) des Hauptdrosselkörpers (6) gelagert ist.

5. Stellventil nach einem der Ansprüche 1 bis 4,
**dadurch gekennzeichnet,** daß Haupt- und Hilfsspindel (5, 50) über ein Antriebsglied (2) von einem gemeinsamen Spindeltrieb (1) bewegbar sind.

6. Stellventil nach Anspruch 5,
**dadurch gekennzeichnet,** daß das Antriebsglied (2) des Spindeltriebs (1) über die erste federelastische Kupplung (4) mit der Hauptspindel (5) und über die zweite federelastische Kupplung (11) mit der Hilfsspindel (50) gekoppelt ist.

7. Stellventil nach Anspruch 6,
**dadurch gekennzeichnet,** daß zwischen dem Antriebsglied (2) und der zweiten federelastischen Kupplung (11) eine Längenverstelleinrichtung (8) für die Hilfsspindel (50) eingefügt ist.

8. Stellventil nach einem der Ansprüche 1 bis 7,
**dadurch gekennzeichnet,** daß der Hauptdrosselkörper (6) mittels Kolbenringen (15), die in Ringnuten (6c) seines rückwärtigen Teils sitzen, am Innenumfang der Ringwand (14a) der Gehäusekammer (14) dichtend geführt ist.

9. Stellventil nach einem der Ansprüche 1 bis 8,
**dadurch gekennzeichnet,** daß ein den Hauptdrosselkörper (6) tragender Schaftteil (6e) der Hauptspindel (5) eine zentrische, axiale Sacklochbohrung (27) aufweist, in welcher der als ein Stößel ausgebildeter Hilfsdrosselkörper (10a) längsverschieblich bewegbar ist,
daß durch die Sacklochbohrung (27) an ihrem Grunde ein konischer Hilfsventilsitz (16) für den an seinem Ende entsprechend konisch ausgebildeten Hilfsdrosselkörper (10a) gebildet ist und
daß vom Grunde des konischen Hilfsventilsitzes (16) der Hauptkanal (17) durch den Hauptdrosselkörper (6) hindurch bis zur Abströmseite (18) geführt sind.

10. Stellventil nach Anspruch 9,
**dadurch gekennzeichnet,** daß die Nebenkanäle (20, 19) erste der Entwässerung dienende Nebenkanäle (20) umfassen, welche den Druckentlastungsraum (14) dauernd mit der Zuströmseite (13) verbinden, und zweite Nebenkanäle (19) umfassen, welche den Druckausgleichsraum (14) mit dem Grunde der Sacklochbohrung (27) jeweils an einer Stelle verbinden, die nahe oder im Bereich des konischen Hilfsventilsitzes (16) des Hilfsdrosselkörpers (10a) angeordnet ist, so daß eine Verbindung der zweiten Nebenkanäle (19) zum Hauptkanal (17) in Schließstellung des Hilfs drosselkörpers (10a) blockiert, jedoch bei geringem Öffnungshub des Hilfsdrosselkörpers (10a) freigegeben ist.

11. Stellventil nach einem der Ansprüche 1 bis 9,
**dadurch gekennzeichnet,** daß die den rückwärtigen Teil (6d) des Hauptdrosselkörpers (6) dichtend führende Ringwand (14a) der Gehäusekammer (14) an einem zwischen Ventilgehäuse (28) und einer Ventillaterne (21) eingefügten Zwischenstück (26) sitzt und das Zwischenstück mit einer zentrischen Ringkragenpartie (26a) ein Lager für eine Stopfbuchse (22) bildet, durch welche der Schaftteil (6e) des Hauptdrosselkörpers (6) dichtend und gleitend hindurchgeführt ist.

12. Stellventil nach einem der Ansprüche 1 bis 10,
**dadurch gekennzeichnet,** daß der Schaftteil (6e) des Hauptdrosselkörpers (6) im Anschluß an die Sacklochbohrung (27) für den Hilfsdrosselkörper (10a) mit einem erweiterten Hohlraum (6f) versehen und innerhalb dieses Hohlraums (6f) die Hilfsspindel (50) mit ihrer zweiten federelastischen Kupplung (11) in Hubrichtung bewegbar ist.

13. Stellventil nach einem der Ansprüche 1 bis 11,
**dadurch gekennzeichnet,** daß die zweite federelastische Kupplung (11) ein Federkorb mit einer vorgespannten Druckfeder-, insbesondere Tellerfeder-Anordnung ist, wobei an einem Hilfsspindelunterteil (10) der Federkorb (11b) sitzt und ein Hilfsspindeloberteil (9) mit einem verstärkten Kopfteil (9a) innerhalb des Federkorbs (11b) längsverschieblich und belastet durch die Druckfeder-Anordnung (11a) gelagert sowie durch einen Korbdeckel (11c) gefangen ist.

14. Stellventil nach einem der Ansprüche 1 bis 13,
**dadurch gekennzeichnet,** daß zur Verdrehsicherung und Hubanzeige der Hauptspindel (5) diese bzw. ihr Schaftteil (6e) mit seitlich abstehenden Rollenarmen (12) in Längsschlitzen (21a) der Umfangswand der Ventillaterne (21) in Hubrichtung (± y) geführt ist.

15. Stellventil nach einem der Ansprüche 1 bis 14,
**dadurch gekennzeichnet,** daß bei noch nicht eingedrückter erster federelastischer Kupplung (4) der Hauptspindel (5) für die Hilfsspindel (50) ein maximaler Hub vorgesehen ist, welcher ungefähr dem halben Einfederweg der ersten federelastischen Kupplung (4) entspricht.

16. Stellventil nach einem der Ansprüche 1 bis 15,
**dadurch gekennzeichnet,** daß ein Schubantrieb (1) als Spindeltrieb und eine Kolbenstange (2) als Antriebsglied vorgesehen sind und daß die erste federelastische Kupplung (4) als ein Federkorb (4a) ausgebildet ist, mit einer im Korbgehäuse (4b) gelagerten vorgespannten Druckfeder (4c), die sich einerseits am Korbboden und andererseits an einem Ringflansch (2a) der Kolbenstange (2) abstützt, welcher seinerseits mittels eines Korbdeckels (4e ) im Korbgehäuse gefangen ist.

17. Stellventil nach Anspruch 16,
**dadurch gekennzeichnet,** daß die Druckfeder (4c) eine vorgespannte Tellerfeder-Anordnung ist.

18. Stellventil nach Anspruch 16 oder 17,
**dadurch gekennzeichnet,** daß der Schubantrieb ein hydraulisches Kolben-Zylinder-System ist.

19. Stellventil nach einem der Ansprüche 1 bis 15,
**dadurch gekennzeichnet,** daß der Spindelantrieb (31) ein Drehantrieb ist, mit einer Spindelmutteranordnung (32), durch deren Drehung der Hauptspindel (5) und der Hilfsspindel (50) je eine Bewegung in Hubrichtung erteilbar ist, wobei durch die erste (40), der Hauptspindel (5) zugeordnete und die zweite, der Hilfsspindel (50) zugeordnete federelastische Kupplung (11) eine axiale Relativbewegung der beiden Spindeln ermöglicht ist.

20. Stellventil nach Anspruch 19,
**dadurch gekennzeichnet,**
- daß eine mit dem Spindeltrieb (31) drehfest verbundene erste Spindelmutter (32a) mit einem Innengewinde (33) eine Schraublagerung für die verdrehungsgesicherte Hilfsspindel (50) zu deren Axialbewegung bildet,
- daß auf einem Führungsschaft (36) der ersten Spindelmutter (32a) eine zweite Spindelmutter (32b) drehfest, jedoch axial verschieblich gelagert ist,
- daß in einem axialen Zwischenraum (38) zwischen erster (32a) und zweiter (32b) Spindelmutter die erste federelastische Kupplung (40) eingefügt ist
- und daß die zweite Spindelmutter (32a) mit einem Gewindeschaft (42) eine Schraublagerung für die verdrehungsgesicherte Hauptspindel (5) zu deren Axialbewegung bildet.

21. Stellventil nach Anspruch 20,
**dadurch gekennzeichnet,** daß die erste federelastische Kupplung (40) eine vorgespannte Druckfeder-, insbesondere eine vorgespannte Tellerfeder-Anordnung (40a) ist.

22. Stellventil nach einem der Ansprüche 19 bis 21,
**dadurch gekennzeichnet,** daß die Gewindesteigungen der ersten Spindelmutter (32a) und der in dieser schraubgelagerten Hilfsspindel (50) gleich sind den Gewindesteigungen der zweiten Spindelmutter (32b) und der an dieser schraubgelagerten Hauptspindel (5).

23. Stellventil nach einem der Ansprüche 1 bis 22,
**dadurch gekennzeichnet,** daß der Unterteil (10) der Hilfsspindel (50) mit seinem stößelartigen Hilfsdrosselkörper (10a) im Endbereich der Sacklochbohrung (27) des Schaftteils (6e) des Hauptdrosselkörpers (6) mittels einer Stopfbuchse (23) dichtend und gleitend hindurchgeführt ist.

## Claims

1. Control valve for vaporous or liquid media, having a main flow restrictor (6) for opening and closing a main valve (V1), an auxiliary flow restrictor (10a) for opening and closing an auxiliary valve (HV) and a common spindle actuator (1), characterized by the following features:
a) a main spindle (5) associated with the main valve (V1) for transmitting the thrust forces to the main flow restrictor (6),
b) an auxiliary spindle (50) associated with the auxiliary valve (HV) for transmitting the thrust forces to the auxiliary flow restrictor (10a),
c) the actuating forces of the common spindle actuator (1) for main spindle (5) and auxiliary spindle (50) can each be transmitted via first and second elastic couplings (4, 11) to the main and auxiliary flow restrictors (6, 10a), the two spindles (5, 50) being coordinated with one another so that
c1) the main flow restrictor (6) closes during the closure operation before the auxiliary flow restrictor (10a) reaches its auxiliary valve seating (16), and
c2) the auxiliary flow restrictor (10a) opens during the opening operation before the main flow restrictor (6) leaves its main valve seating (7).

2. Control valve according to Claim 1, characterized by the following further features:
a) the main flow restrictor (6) has a pressure-relief duct system (DA) having a main duct (17) which, in the open state, connects a pressure-relief chamber (14) to the delivery side (18) of the control valve (S1) ,
b) the pressure-relief chamber (14) is a housing chamber designed as piston chamber on whose annular wall (14a) the rear piston-like part of the main flow restrictor (6) is guided, the pressure-relief chamber (14) being permanently in communication with the inflow side of the control valve (S1) via first auxiliary ducts (20) which are used for water removal and being in communication with the delivery side (18) of the control valve (S1), via second auxiliary ducts (19) which are used for pressure relief, only when the main duct (17) is open.

3. Control valve according to Claim 2, characterized in that the auxiliary valve seating (16) is part of the main flow restrictor (6), with the result that the main channel (17)
- can be closed by the auxiliary flow restrictor (10a) after the main valve (V1) has been closed by the main flow restrictor (6) and the closure force acting on the main flow restrictor (6) is therefore increased by the inflow pressure building up in the pressure-relief chamber (14),
- can be opened by the auxiliary flow restrictor (10a) before the main valve (V1) has been opened by the main flow restrictor (6) and the opening movement of the main flow restrictor (6) is therefore facilitated by the pressure in the pressure-relief chamber (14) falling to a value which is virtually equal to the delivery side pressure as a result of the disappearance of the pressure forces acting against said opening movement.

4. Control valve according to one of Claims 1 to 3, characterized in that the auxiliary flow restrictor (10a), together with its auxiliary spindle (50) is mounted coaxially and so as to be longitudinally displaceable inside the main spindle (5) of the main flow restrictor (6).

5. Control valve according to one of Claims 1 to 4, characterized in that the main and auxiliary spindles (5, 50) can be moved by means of an actuating member (2) of a common spindle actuator (1).

6. Control valve according to Claim 5, characterized in that the actuating member (2) of the spindle actuator (1) is linked by means of the first elastic coupling (4) to the main spindle (5) and by means of the second elastic coupling (11) to the auxiliary spindle (50).

7. Control valve according to Claim 6, characterized in that a length adjustment device (8) for the auxiliary spindle (50) is inserted between the actuating member (2) and the second elastic coupling (11).

8. Control valve according to one of Claims 1 to 7, characterized in that the main flow restrictor (6) is guided in a sealed manner on the inside circumference of the annular wall (14a) of the housing chamber (14) by means of piston rings (15) which are seated in annular grooves (6c) of its rear part.

9. Control valve according to one of Claims 1 to 8, characterized in that a shaft part (6e) of the main spindle (5), which shaft part (6e) supports the main flow restrictor (6), has a central, axial blind bore (27) in which the auxiliary flow restrictor (10a), which is designed as a plunger, can be moved in a longitudinally displaceable manner, in that a conical auxiliary valve seating (16) is formed at the base of the blind bore (27) for the auxiliary flow restrictor (10a) whose end is designed in a correspondingly conical manner, and in that the main duct (17) is routed from the base of the conical auxiliary valve seating (16) through the main flow restrictor (6) to the delivery side (18).

10. Control valve according to Claim 9, characterized in that the auxiliary ducts (20, 19) comprise first auxiliary ducts (20) which are used for water removal and which permanently connect the pressure-relief chamber (14) to the inflow side (13), and they comprise second auxiliary ducts (19) which connect the pressure-relief chamber (14) to the base of the blind bore (27) in each case at a point which is disposed near to, or in the region of, the conical auxiliary valve seating (16) of the auxiliary flow restrictor (10a) so that a connection of the secondary auxiliary ducts (19) to the main duct (17) is blocked in the closed position of the auxiliary flow restrictor (10a) but is cleared in the event of a slight opening movement of the auxiliary flow restrictor (10a).

11. Control valve according to one of Claims 1 to 9, characterized in that that annular wall (14a) of the housing chamber (14) which guides the rear part (6d) of the main flow restrictor (6) in a sealed manner is seated on an intermediate piece (26) inserted between valve housing (28) and a valve cage (21) and the intermediate piece forms, with a central annular collar portion (26a), a bearing for a gland (22) through which the shaft part (6e) of the main flow restrictor (6) is passed in a sealing and sliding manner.

12. Control valve according to one of Claims 1 to 10, characterized in that the shaft part (6e) of the main flow restrictor (6) is provided with an enlarged cavity (6f) for the auxiliary flow restrictor (10a) adjacent to the blind bore (27) and the auxiliary spindle (50) with its second elastic coupling (11) can be moved in the direction of travel inside said cavity (6f).

13. Control valve according to one of Claims 1 to 11, characterized in that the second elastic coupling (11) is a spring basket having a pretensioned compression-spring arrangement, in particular a cup-spring arrangement, the spring basket (11b) being seated on an auxiliary-spindle lower section (10) and an auxiliary-spindle upper section (9) being supported by means of a reinforced head part (9a) inside the spring basket (11b) in a longitudinally displaceable manner and loaded by the compression-spring arrangement (11a) and being trapped by a basket lid (11c).

14. Control valve according to one of Claims 1 to 13, characterized in that to prevent rotation and indicate the travel of the main spindle (5), the latter, or its shaft part (6e) is guided in the direction of travel (± y) by means of laterally projecting roller arms (12) in longitudinal slots (21a) of the circumferential wall of the valve cage (21).

15. Control valve according to one of Claims 1 to 14, characterized in that, if the first elastic coupling (4) of the main spindle (5) is not pressed in, a maximum travel which is equivalent to approximately half the spring deflection of the first elastic coupling (4) is provided for the auxiliary spindle (50).

16. Control valve according to one of Claims 1 to 15, characterized in that a thrust actuator (1) is provided as spindle actuator and a piston rod (2) is provided as actuator member and in that the first elastic coupling (4) is designed as a spring basket (4a) having a pretensioned compression spring (4c) which is mounted in the basket housing (4b) and is supported, on the one hand, on the basket base and, on the other hand, on an annular flange (2a) of the piston rod (2), which flange is in turn trapped in the basket housing by means of a basket lid (4e).

17. Control valve according to Claim 16, characterized in that the compression spring (4c) is a pretensioned cup-spring arrangement.

18. Control valve according to Claim 16 or 17, characterized in that the thrust actuator is a hydraulic piston-and-cylinder system.

19. Control valve according to one of Claims 1 to 15, characterized in that the spindle actuator (31) is a rotary actuator having a spindle-nut arrangement (32) as a result of whose rotation a movement in the direction of travel can be imparted in each case to the main spindle (5) and the auxiliary spindle (50), an axial relative movement of the two spindles being made possible by the first elastic coupling (40) associated with the main spindle (5) and the second elastic coupling (11) associated with the auxiliary spindle (50).

20. Control valve according to Claim 19, characterized
- in that a first spindle nut (32a) which is non-rotationally joined to the spindle actuator (31) and has an internal thread (33) forms a screw mounting for the torsionally secured auxiliary spindle (50) for the purpose of its axial movement,
- in that a second spindle nut (32b) is mounted non-rotatably but axially displaceably on a guide shaft (36) of the first spindle nut (32a),
- in that the first elastic coupling (40) is inserted in an axial intermediate chamber (38) between first spindle nut (32a) and second spindle nut (32b),
- and in that the second spindle nut (32b) forms, with a threaded shaft (42), a screw mounting for the torsionally secured main spindle (5) for the purpose of its axial movement.

21. Control valve according to Claim 20, characterized in that the first elastic coupling (40) is a pretensioned compression-spring arrangement, in particular a pretensioned cup-spring arrangement (40a).

22. Control valve according to one of Claims 19 to 21, characterized in that the thread pitches of the first spindle nut (32a) and of the auxiliary spindle (50) screw-mounted in the latter are equal to the thread pitches of the second spindle nut (32b) and of the main spindle (5) screw-mounted on the latter.

23. Control valve according to one of Claims 1 to 22, characterized in that the lower section (10) of the auxiliary spindle (50) with its plunger-like auxiliary flow restrictor (10a) is passed through in a sealed and sliding manner in the end region of the blind bore (27) of the shaft part (6e) of the main flow restrictor (6) by means of a gland (23).

## Revendications

1. Servo-soupape pour des fluides à l'état de vapeur ou de liquide, comportant un dispositif d'étranglement principal (6) du courant servant à ouvrir et fermer une soupape principale (V1), un dispositif d'étranglement auxiliaire (10a) du courant servant à ouvrir et fermer une soupape auxiliaire (HV) et un dispositif (1) commun d'entraînement de broches, caractérisée par les caractéristiques suivantes :
a) une broche principale (5) associée à la soupape principale (V1) servant à transmettre les forces de poussée au dispositif d'étranglement principal (6) du courant,
b) une broche auxiliaire (50) associée à la soupape auxiliaire (HV) servant à transmettre les forces de poussée au dispositif d'étranglement auxiliaire (10a) du courant,
c) les forces de réglage du dispositif (1) commun d'entraînement de broches pour la broche principale (5) et la broche auxiliaire (50) peuvent être transmises respectivement par l'intermédiaire de premier et second accouplements élastiques (4,11) à ressort aux dispositifs d'étranglement principal et auxiliaire (6,10a) du courant, les deux broches (5,50) étant réglées l'une par rapport l'autre de telle sorte que,
c1) lors de l'opération de fermeture, le dispositif d'étranglement principal (6) du courant se ferme avant que le dispositif d'étranglement auxiliaire (10a) du courant ait atteint son siège (16) de soupape auxiliaire, et
c2) lors de l'opération d'ouverture, le dispositif d'étranglement auxiliaire (10a) du courant s'ouvre avant que le dispositif d'étranglement principal (6) du courant ait quitté son siège (7) de soupape principale.

2. Servo-soupape selon la revendication 1, caractérisée par les caractéristiques supplémentaires suivantes :
a) le dispositif d'étranglement principal (6) du courant possède un système (DA) de canaux de détente de pression comprenant un canal principal (17), qui, à l'état ouvert, relie une chambre (14) de détente de pression au côté d'évacuation (18) de la servo-soupape (S1),
b) la chambre de détente de pression (14) est une chambre de boîtier, réalisée sous la forme d'une chambre de piston, la partie arrière en forme de piston du dispositif d'étranglement principal (6) du courant étant guidée contre la paroi annulaire (14a), la chambre de détente de pression (14) étant reliée en permanence par l'intermédiaire de premiers canaux secondaires (20), utilisés pour la déshydratation, au côté d'admission de la servo-soupape (S1), et étant reliée, uniquement lorsque le canal principal (17) est ouvert, par l'intermédiaire de seconds canaux secondaires (19) utilisés pour la détente de pression, au côté d'évacuation (18) de la servo-soupape (S1).

3. Servo-soupape selon la revendication 2, caractérisée par le fait que le siège de soupape auxiliaire (16) fait partie du dispositif d'étranglement principal (6) du courant, de sorte que le canal principal (17) peut, par le dispositif d'étranglement principal (10a) du courant,
- être fermé après la fermeture de la soupape principale (V1) par le dispositif d'étranglement principal (6) du courant, et de ce fait la force de fermeture, qui agit sur le dispositif d'étranglement principal (6) du courant, est accrue par la pression qui est appliquée sur le côté admission et qui s'établit dans la chambre de détente de pression (14), et
- être ouvert, avant l'ouverture de la soupape principale (V1) par le dispositif d'étranglement principal (6) du courant, et de ce fait, étant donné que la pression diminue dans la chambre de détente de pression (14) à une valeur qui est presque égale à la pression sur le côté évacuation, le déplacement d'ouverture du dispositif d'étranglement principal (6) du courant est facilité par suite de la suppression de forces de pression agissant à l'encontre de ce déplacement.

4. Servo-soupape selon l'une des revendications 1 à 3, caractérisée par le fait que la broche auxiliaire (50) du dispositif d'étranglement auxiliaire (10a) du courant est montée coaxialement et de manière à pouvoir se déplacer longitudinalement à l'intérieur de la broche principale (5) du dispositif d'étranglement principal (6) du courant.

5. Servo-soupape selon l'une des revendications 1 à 4, caractérisée par le fait que la broche principale et la broche auxiliaire (5, 50) sont déplaçables, au moyen d'un organe d'entraînement (2), par un dispositif (1) commun d'entraînement de broches.

6. Servo-soupape selon la revendication 5, caractérisée par le fait que l'organe d'entraînement (2) du dispositif (1) d'entraînement de broches est accouplé à la broche principale (5) par l'intermédiaire du premier accouplement (4) élastique à ressort et à la broche auxiliaire (50) par l'intermédiaire du second accouplement (11) élastique à ressort.

7. Servo-soupape selon la revendication 6, caractérisée par le fait qu'un dispositif (8) de réglage de longueur pour la broche auxiliaire (50) est inséré entre l'organe d'entraînement (2) et le second accouplement (11) élastique à ressort

8. Servo-soupape selon l'une des revendications 1 à 7, caractérisée par le fait que le dispositif d'étranglement principal (6) du courant est guidé d'une manière étanche contre la périphérie intérieure de la paroi annulaire (14a) de la chambre (14) du boîtier, au moyen de bagues de piston (15), qui sont logées dans des gorges annulaires (6c) de la partie arrière du piston.

9. Servo-soupape selon l'une des revendications 1 à 8, caractérisée par le fait qu'une partie en forme de tige (6e), qui porte le dispositif d'étranglement principal (6) du courant, de la broche principale (5) possède un trou axial borgne centré (27), dans lequel le dispositif d'étranglement auxiliaire (10a) du courant, agencé sous la forme d'un poussoir, peut se déplacer longitudinalement, il est formé, au fond du trou borgne (27), un siège (16) conique de soupape auxiliaire pour le dispositif d'étranglement auxiliaire (10a) du courant, qui a à son l'extrémité une forme conique correspondante, et
le canal principal (17) s'étend depuis le fond du siège conique de soupape auxiliaire (16) jusqu'au côté d'évacuation (18), en traversant le dispositif d'étranglement principal (6) du courant.

10. Servo-soupape selon la revendication 9, caractérisée par le fait que les canaux secondaires (20,19) comprennent des premiers canaux secondaires (20), qui sont utilisés pour la déshydratation et qui relient en permanence la chambre de détente de pression (14) au côté d'admission (13), et des seconds canaux secondaires (19), qui relient la chambre de compensation de pression (14) au fond du trou borgne (27), et ce respectivement en un emplacement qui est situé à proximité ou dans la zone du siège (16) conique de soupape auxiliaire du dispositif d'étranglement auxiliaire (10a) du courant, de sorte qu'une liaison entre les seconds canaux secondaires (19) et le canal principal (17) est bloquée, lorsque le dispositif d'étranglement auxiliaire (10a) du courant est en position fermée, mais est libérée pour une faible course d'ouverture du dispositif d'étranglement auxiliaire (10a) du courant.

11. Servo-soupape selon l'une des revendications 1 à 9, caractérisée par le fait que la paroi annulaire (14a), qui guide d'une manière étanche la partie arrière (6d) du dispositif d'étranglement principal (6) du courant, de la chambre (14) du boîtier prend appui contre un élément intercalaire (26) inséré entre le boîtier (28) de la soupape et une cloche (21) de la soupape, et que l'élément intercalaire forme, au moyen d'une partie formant collet annulaire centré (26a), un support pour une calotte d'obturation (22), que la partie formant tige (6e) du dispositif d'étranglement principal (6) du courant traverse d'une manière étanche et en y glissant.

12. Servo-soupape selon l'une des revendications 1 à 10, caractérisée par le fait que la partie formant tige (6e) du dispositif d'étranglement principal (6) du courant comporte, à la suite du trou borgne (27) pour le dispositif d'étranglement auxiliaire du courant (10a), une cavité élargie (6f), et qu'à l'intérieur de cette cavité (6f), la broche auxiliaire (50) peut être déplacée, conjointement avec son second accouplement élastique à ressort (11), dans la direction de levage.

13. Servo-soupape selon l'une des revendications 1 à 11, caractérisée par le fait que le second accouplement élastique à ressort (11) est une cage à ressort comportant un dispositif précontraint à ressort de pression et notamment à ressort Belleville, la cage à ressort (11b) prenant appui contre une partie inférieure (10) de la broche auxiliaire, tandis qu'une partie supérieure (9) de cette broche auxiliaire est équipée d'une partie de tête renforcée (9a) et déplaçable longitudinalement à l'intérieur de la cage à ressort (11b) et y est montée en étant chargée par le dispositif à ressort de pression (11a) et y est retenue au moyen d'un couvercle (11c) de la cage.

14. Servo-soupape selon l'une des revendications 1 à 13, caractérisée par le fait que pour le blocage en rotation et l'indication de levage de la broche principale (5), cette dernière ou sa partie formant tige (6e) est guidée au moyen de bras (12) qui font saillie latéralement et portent des galets, dans des fentes longitudinales (21a) de la paroi circonférentielle de la cloche de soupape (21), dans la direction de levage (±y).

15. Servo-soupape selon l'une des revendications 1 à 14, caractérisée par le fait que, lorsque le premier accouplement élastique à ressort (4) de la broche principale (5), n'est pas encore comprimé, il est prévu pour la broche auxiliaire (50) une course maximale, qui correspond approximativement à la moitié de la course de compression du premier accouplement à ressort (4).

16. Servo-soupape selon l'une des revendications 1 à 15, caractérisée par le fait qu'un dispositif d'entraînement en poussée (1) est prévu en tant que dispositif d'entraînement de broche, une tige de piston (2) est prévue en tant qu'organe d'entraînement et le premier accouplement élastique à ressort (4) est réalisé sous la forme d'une cage à ressort (4a) comportant un ressort de pression précontraint (4c), qui est monté dans le logement de la cage (4b) et prend appui d'une part sur le fond de la cage et d'autre part sur une bride annulaire (2a) de la tige de piston (2), qui est retenue pour sa part au moyen d'un couvercle de cage (4e) dans le boîtier de la cage.

17. Servo-soupape suivant la revendication 16, caractérisée par le fait que le ressort de pression (4c) est un dispositif à ressort Belleville précontraint.

18. Servo-soupape selon la revendication 16 ou 17, caractérisée par le fait que le dispositif d'entraînement en poussée est un système à piston-cylindre hydraulique.

19. Servo-soupape selon l'une des revendications 1 à 15, caractérisée par le fait que le dispositif (31) d'entraînement de broche est un dispositif d'entraînement rotatif, comportant un dispositif à écrou de broche (32), et sous l'effet de la rotation duquel la broche principale (5) et la broche auxiliaire (50) exécutent respectivement un déplacément dans la direction de levage, le premier accouplement élastique à ressort (40) associé à la broche principale (5) et le second accouplement élastique à ressort (11) associé à la broche auxiliaire (50) permettant un déplacement axial relatif des deux broches.

20. Servo-soupape suivant la revendication 19, caractérisée par le fait
- qu'un premier écrou de broche (32a) relié avec blocage en rotation au dispositif d'entraînement de broche (31) et comportant un taraudage (33) forme un support de vissage pour la broche auxiliaire (50) bloquée en rotation, pour permettre son déplacement axial,
- un second écrou de broche (32b) est monté avec blocage en rotation, sur une tige de guidage (36) du premier écrou de broche (32a), mais de manière à pouvoir se déplacer axialement,
- le premier accouplement élastique à ressort (40) est inséré dans un espace intercalaire axial (38) présent entre le premier écrou de broche (32a) et le second écrou de broche (32b), et
- le second écrou de broche (32a), pourvu d'une tige filetée (42), forme un support avec vissage pour la broche principale (5) bloquée en rotation, pour permetttre son déplacement axial.

21. Servo-soupape suivant la revendication 20, caractérisée par le fait que le premier accouplement élastique à ressort (40) est un dispositif à ressort de pression précontraint, notamment un dispositif à ressort Belleville précontraint (40a).

22. Servo-soupape selon l'une des revendications 19 à 21, caractérisée par le fait que les pas des filetages du premier écrou de broche (32a) et de la broche auxiliaire (50) insérée par vissage dans cet écrou de broche, sont égaux aux pas de filetage du second écrou de broche (32b) et de la broche principale (5) insérée par vissage dans cet écrou.

23. Servo-soupape selon l'une des revendications 1 à 22, caractérisée par le fait que la partie inférieure (10) de la broche auxiliaire (50) traverse, par son dispositif d'étranglement auxiliaire (10a) du courant en forme de poussoir, d'une manière étanche avec possibilité de glissement au moyen d'une calotte d'obturation (23), la partie d'extrémité du trou borgne (27) de la partie formant tige (6e) du dispositif d'étranglement principal (6) du courant.
